# EUROPÄISCHE PATENTANMELDUNG

(11) **EP 2 385 284 A1**
(43) Veröffentlichungstag der Anmeldung: **09.11.2011**
(21) Anmeldenummer: 11002626.7
(22) Anmeldetag: 30.03.2011
(51) Int. Cl.: F16K 31/163, F16K 31/54, F16H 19/00, F15B 15/06

(54) **Stellantrieb für eine Armatur**

(30) Priorität: 04.05.2010 DE 102010019396
(71) Anmelder: ROTECH Antriebselemente GmbH, 76275 Ettlingen (DE)
(72) Erfinder: Peters, Heinz, 76275 Ettlingen (DE)
(74) Vertreter: Lemcke, Brommer & Partner

(57) **Zusammenfassung**

Vorgeschlagen wird ein Stellantrieb für eine Armatur, mit wenigstens einem Kolben der über eine Verzahnung an einer ihm zugeordneten Kolbenstange auf eine mit einer Gegenverzahnung versehene Stellwelle wirkt. Damit der Stellantrieb rückfreier läuft und robuster und betriebssicherer ausgestaltet ist zeichnet er sich dadurch aus, dass die Verzahnung zwischen Kolbenstange und Stellwelle eine Schrägverzahnung ist, vorzugsweise eine Pfeilverzahnung.

## Beschreibung

Die Erfindung betrifft einen Stellantrieb für eine Armatur, mit wenigstens einem Kolben, der über eine Verzahnungen einer ihm zugeordneten Kolbenstange auf eine mit einer Gegenverzahnung versehene um eine Achse drehende Stellwelle wirkt.

Armaturen der angesprochenen Art finden sich in verschiedensten Anlagen, wo mit verstellbaren Querschnittsverengungen ein Stoffstrom gedrosselt bzw. abgesperrt werden soll. Dabei wird diese Armatur, insbesondere in automatisch betriebenen Anlagen, durch den genannten Stellantrieb betätigt, der durch Stellkraft und Stellweg diese Querschnittsverengung bewirkt.

Üblicherweise wird der Stellantrieb auf die Armatur aufgesetzt. Dabei wird über die Stellwelle, die mit einem Wellenzapfen aus dem Stellantrieb herausragt, die Armatur mit dem Stellantrieb verbunden.

Es ist dabei auch bekannt, dass der Stellantrieb mit einem insbesondere pneumatischen doppelt oder einfach wirkenden Zylinder-Kolben-Aggregat als Antrieb versehen ist, wobei die (axiale) Position des Kolbens über ein Getriebe auf die Stellwelle und damit auf die Armatur übertragen wird.

Bei diesem Getriebe handelt es sich im Rahmen der hier vorliegenden Erfindung um einen Schwenkantrieb, wobei die Achse der Stellwelle mit der Schwenkachse der Armatur übereinstimmt.

Es hat sich herausgestellt, dass die vom Stellantrieb ausgeübte Stellkraft über den Stellweg nicht gleichmäßig verläuft, sondern über den Stellweg höherfrequenten Schwankungen unterliegt, die im Rahmen dieser Anmeldung als "Ruckeln" bezeichnet werden. Dies kann bei hochpräzisen Anforderungen zu unerwünschten Effekten führen, da es durch die "ruckelnde" Verstellbewegung insbesondere während der Verstellung und der dabei arbeitender Regelung auch zu unerwünschten Regelabweichungen und Schwingungen innerhalb der durch die Armatur geregelten Leitungen kommen kann.

Aufgabe der vorliegenden Erfindung ist es daher, einen Stellantrieb für eine Armatur anzugeben, der ohne derartige "Ruckelbewegungen" betreibbar ist.

Diese Aufgabe wird erfindungsgemäß dadurch gelöst, dass die im Stellantrieb zwischen dem Kolben und der Stellwelle vorhandene Verzahnung eine Schrägverzahnung ist.

Der Erfindung liegt die überraschende Erkenntnis zugrunde, dass für die angesprochene "Ruckel"-bewegung zu einem großen Teil Einlaufstöße der Verzahnung zwischen Kolbenstange und Stellwelle ursächlich sind. Derartige Einlaufstöße werden durch die Verwendung einer Schrägverzahnung verhindert.

Durch die Schrägverzahnung wird nämlich ein insbesondere für die Regelung vorteilhafter ruhiger Lauf erreicht, da der Eingriff der Verzahnung zwischen Kolbenstange und Stellwelle allmählich erfolgt und gleichzeitig mehr Zähne im Eingriff sind, da die Schrägverzahnung auch einen hohen Überdeckungsgrad aufweist.

Gegenüber der Geradverzahnung ist die Schrägverzahnung auch wesentlich höher belastbar. Bei "Wasserschlägen" oder ähnlichen Stößen durch die Armatur kommt es bei den bisher üblichen Geradverzahnungen immer wieder vor, dass durch solche Belastungen Zähne abbrechen. Diese Schäden sind mit der hier vorgeschlagenen Schrägverzahnung nicht mehr zu befürchten. Außerdem ist die Schrägverzahnung also robuster.

Bei einer weiter bevorzugten Ausführungsform weist die vorgesehene Verzahnung zwei gegeneinander geneigte Verzahnungsabschnitte auf. Dies wird als "Doppelschräg-" oder "Pfeilverzahnung" bezeichnet und hat weitere Vorteile:

Ein Vorteil ist, dass sich von der Schrägverzahnung auf die Stellwelle ausgeübte Kräfte gegenseitig aufheben. Dadurch werden auch die Lager der Stellwelle nicht in axialer Richtung belastet. Hierdurch werden einerseits zusätzliche Reibungskräfte in der Lagerung vermieden. Außerdem können diese Lagerungen konstruktiv einfacher ausgeführt werden. Dies führt wiederum dazu, dass die Vorrichtung betriebssicherer als auch kostengünstiger in der Herstellung wird.

Ein weiterer Vorteil ist, dass die entlang der Stellwelle geführten Kolbenstangen über die Pfeilverzahnung sich selbst zentrieren und dabei auch in ihrer bezüglich der Stellwelle axialen Position präzise zu führen sind. Damit werden z. B. auch die Kolben, die starr mit den Kolbenstangen verbunden sind, ohne unerwünschte Kippbewegungen innerhalb der ihnen zugeordneten Zylinderräume geführt, auch wenn die Kolben relativ kurz sind. Bisher wurde ein Kippen der Kolben verhindert, indem sie relativ lang ausgebildet wurden. Dies hat aber auch Nachteile, weil die Stellantriebe dann relativ groß werden und auch zusätzliche Reibung überwunden werden muss.

Alternativ ist es bekannt, die fest mit dem Kolben verbundenen Kobenstangen an der Wandung des Zylinderraumes, in dem der Kolben geführt wird, entlang zu führen. Durch die jetzt vorgeschlagene Führung mittels der oben beschriebenen Pfeilverzahnung hat die Anlagefläche der Kolbenstange an der Zylinderwand eine geringere Bedeutung und sie kann somit mit einer geringeren Präzision und damit kostengünstiger hergestellt werden.

Bei einer besonders bevorzugten Ausführung der Erfindung gehen die zwei gegeneinander geneigten Verzahnungsabschnitte nicht unmittelbar ineinander über sondern zwischen ihnen befindet sich eine Lücke. Dies hat insbesondere fertigungstechnische Vorteile, da die Werkzeuge zur Herstellung der unter verschiedenen Neigungen laufenden Verzahnungsabschnitte in diese Lücke hinein auslaufen können. Da diese Lücke auch auf Seiten der Kolbenstange vorhanden ist, wird hier im Gegensatz zu einem sonst üblichen Wulst auch Material eingespart. Die entsprechenden Kolbenstangen können somit auch mit weniger Material hergestellt werden, was mit einer geringeren Massenträgheit einhergeht, so dass das "Response"-Verhalten des Stellantriebes weiter verbessert ist.

Bei einer besonderen Ausführungsform der Schrägverzahnung sind die Verzahnungsabschnitte zueinander versetzt angeordnet, so dass eine noch gleichmäßigere, stoßfreiere Kraftübertragung möglich ist.

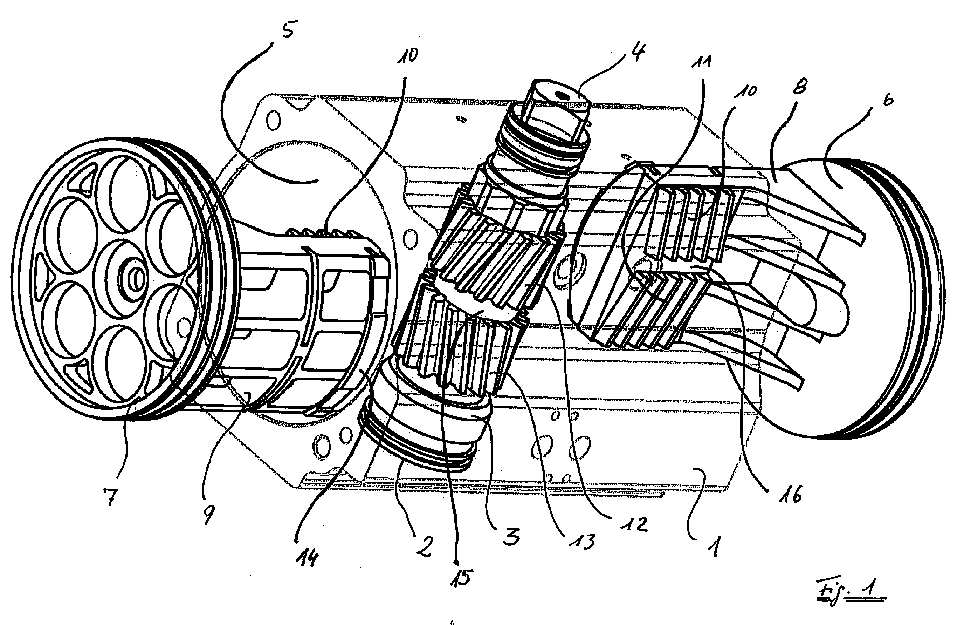

Weitere Vorteile und Merkmale der Erfindung ergeben sich aus der nachfolgenden Beschreibung eines Ausführungsbeispiels. Dabei zeigt
- Figur 1: eine Prinzipskizze einer erfindungsgemäßen Vorrichtung in Explosionsdarstellung.

In der Figur 1 erkennt man das Gehäuse 1 eines Stellantriebes. Ein solcher Stellantrieb wird auf eine (nicht dargestellte) Armatur aufgesetzt und ist dabei über den Wellenzapfen 2 einer Stellwelle 3 an das Schließelement einer Armatur angekoppelt. Dieses Schließelement, z. B. ein Klappenventil oder aber ein Kugelventil, wird über diese Stellwelle verschwenkt und führt so innerhalb der Armatur zu einer Querschnittsverengung, wodurch ein Stroffstrom gedrosselt bzw. abgesperrt wird.

Dem Wellenzapfen 2 gegenüber ist die Stellwelle 3 an ihrem anderen Ende mit einem Mehrkant 4 versehen. Mit diesem Mehrkant 4 ragt sie ebenfalls aus dem Gehäuse 1 heraus. An diesem Mehrkant kann ein Positionsgeber angekoppelt werden, über den die Position des Schließelementes innerhalb der Armatur erfasst wird. Diese Position kann dann entweder direkt am Positionsgeber oder aber mit einer Fernanzeige angezeigt werden.

Innerhalb des Gehäuses 1 weist der hier dargstellte Stellantrieb eine Zylinderbohrung 5 auf mit kreisförmigem Querschnitt. In dieser Zylinderbohrung 5 sind zwei Kolben 6, 7 verschiebbar. Hierzu wird entweder der zwischen den Kolben 6, 7 liegende Raum vorzugsweise pneumatisch mit Druck beaufschlagt, wodurch die beiden Kolben 6, 7 auseinander getrieben werden, oder aber die außerhalb der Kolben liegenden Räume innerhalb der Zylinderbohrung 5 werden mit Druck beaufschlagt, wodurch die beiden Kolben 6, 7 aufeinander zu bewegt werden. Die außerhalb der Kolben liegenden Räume werden durch hier nicht dargestellte Deckel begrenzt, die die Zylinderbohrung 5 an ihren Enden verschließen.

Bei den beschriebenen Bewegungen greifen die Kolben 6, 7 über einstückig an ihnen angeformte Kolbenstangen 8, 9 an der Stellwelle 3 an. Dabei kämmen an den Kolbenstangen 8, 9 befindliche Verzahnungsabschnitte 10, 11 mit korrespondierenden Verzahnungsabschnitten 12, 13 an der Stellwelle 3. Die Verzahnungsabschnitte 10, 11 an den Kolbenstangen 8 bzw. 9 und die Verzahnungsabschnitte 12, 13 an der Stellwelle 3 sind jeweils als Schrägverzahnungen ausgeführt und haben eine Neigung gegeneinander mit jeweils gleichem Winkel gegenüber der Bewegungsrichtung der Kolben 6 bzw. 7.

Durch Verwendung von Schrägverzahnungen wird bei der Verschiebung der Kolben 6, 7 eine sehr gleichmäßige Kraftübertragung auf die Stellwelle 3 erreicht, die sich damit ohne als nachteilig empfundene Ruckelbewegungen drehen kann. Solche Ruckelbewegungen können in den Leitungen, die durch eine Armatur geöffnet oder geschlossen werden, zu unerwünschten Schwingungen führen.

Durch die mehreren gegeneinander geneigten Verzahnungsabschnitte 10, 11 werden auch von den Schrägverzahnungen auf die Stellwelle 3 ausgeübt, in Axialrichtung gerichtete Querkräfte gegeneinander aufgehoben und die Lager für die Stellwelle 3 müssen keine separate Axialabstützung zur Aufnahme dieser Querkräfte aufweisen.

Durch das Vorsehen dieser auch als "Pfeilverzahnung" bezeichneten Schrägverzahnung mit zwei gegeneinander geneigten Verzahnungsabschnitten werden auch die Kolbenstangen 8, 9 bei ihrem Vorbeilaufen an der Stellwelle 3 geführt. Die Kolben 6, 7 können damit innerhalb der Zylinderbohrung 5 auch nicht mehr leicht kippen, da sie einstückig mit den Kolbenstangen 8, 9 hergestellt sind.

Gleichzeitig werden die halbrunden Anlageflächen 14, mit denen die Kolbenstangen 8, 9 an der Wandung der Zylinderbohrung 5 entlang gleiten, von ihren bisherigen entsprechenden Führungsfunktionen für die Kolbenstangen 9 entlastet. Die Anlageflächen 14 müssen somit nicht mehr hochpräzise ausgeführt werden. Hierdurch sind die Kolben und die einstückig an ihnen befindlichen Kolbenstangen auch preiswerter herstellbar.

Die oben angesprochenen Verzahnungsabschnitte 10, 11 bzw. 12, 13 sind an ihren einander zugewandten Enden durch Lücken 15, 16 voneinander beabstandet. Hierdurch sind die schrägen Abschnitte der Schrägverzahnungen leichter herstellbar, da die Herstellwerkzeuge für die Verzahnungen in die genannten Lücken hinein auslaufen können. Dies ist bei der Herstellung der Verzahnung ein erheblicher fertigungstechnischer Vorteil.

Außerdem wird durch diese Lücke insbesondere auch an den Kolbenstangen 8, 9 weniger Material verbraucht und diese haben damit weniger Masse. Die Kolben 6, 7 mit den einstückig an ihnen befestigten Kolbenstangen 8, 9 haben damit grundsätzlich auch eine geringere träge Masse und können somit präziser über die entsprechende Pneumatik in Bewegung gebracht oder abgebremst werden und somit sind entsprechende Stellantriebe damit auch besser steuerbar.

## Patentansprüche

1. Stellantrieb für eine Armatur, mit wenigstens einem Kolben (6, 7) der über eine Verzahnung (10, 11) an einer ihm zugeordneten Kolbenstange (8, 9) auf eine mit einer Gegenverzahnung (12, 13) versehene Stellwelle (3) wirkt, **dadurch gekennzeichnet,**
**dass** die Verzahnung (10, 11; 12, 13) eine Schrägverzahnung ist.

2. Stellantrieb gemäß Anspruch 1,
**dadurch gekennzeichnet,**
**dass** die Verzahnung zwei gegeneinander geneigte Verzahnungsabschnitte (10, 11) aufweist.

3. Stellantrieb gemäß Anspruch 2,
**dadurch gekennzeichnet,**
**dass** zwischen den zwei Verzahnungsabschnitten (10, 11; 12, 13) eine Lücke (15; 16) vorgesehen ist.

4. Stellantrieb gemäß Anspruch 3,
**dadurch gekennzeichnet,**
**dass** die beiden Verzahnungsabschnitte (10, 11; 12, 13) versetzt zueinander angeordnet sind.
